# EUROPEAN PATENT SPECIFICATION

(11) **EP 2 226 355 B1**
(45) Date of publication and mention of the grant of the patent: **04.07.2012**
(21) Application number: 10250352.1
(22) Date of filing: 26.02.2010
(51) Int. Cl.: C08L 23/10, C08L 51/06, H01B 3/44

(54) **Moisture-crosslinked polyolefin compositions**
Feuchtigkeitsvernetzte Polyolefinzusammensetzungen
Compositions de polyoléfine réticulées par l'humidité

(30) Priority: 06.03.2009 US 399565
(43) Date of publication of application: 08.09.2010
(73) Proprietor: ShawCor Ltd., Toronto, Ontario M9W 1M7 (CA)
(72) Inventor: Jackson, Peter, Toronto, Ontario MV8 2G7 (CA); Heydrich, Marcus P., Mississauga, Ontario L5A 2C9 (CA)
(74) Representative: Robson, Aidan John

(56) References cited:
- EP-A1- 1 050 548
- EP-A1- 1 103 986
- GB-A- 2 116 986

## Description

### FIELD OF THE INVENTION

The present invention relates to polymer compositions and their uses, and more particularly to moisture-crosslinked compositions of polyethylene-based and polypropylene-based polymers, and to coatings and insulating materials containing these compositions.

### BACKGROUND OF THE INVENTION

Polypropylenes are ideally suited to the preparation of coatings and insulating materials designed for use at operating temperatures in excess of those that can be withstood by other polyolefins such as, for example, polyethylene, which exhibits lower softening and melting temperatures. Polyethylenes have a maximum melting point, as measured by differential scanning calorimetry (DSC), of about 135°C, whereas polypropylenes can have melting points as high as 175°C. As such, polypropylenes can withstand higher operating temperatures without being permanently damaged or deformed.

Other attractive features of polypropylenes are their high rigidity, abrasion resistance, impact resistance, toughness, low cost and relatively low density. Applications for polypropylene-based coatings and insulations include insulation for electrical wires and cables, heat-shrinkable, corrosion protective sleeves for high-temperature transmission pipeline joints, heat-shrinkable tubing or shapes for electrical insulation and mechanical protection, or other applications requiring greater toughness and rigidity than is afforded by polyethylene-based systems.

In order to maximize heat resistance and physical properties, it is necessary to impart some thermoset characteristic to the material. This is done by crosslinking the polymer to some required degree. This renders the material resistant to melting and flowing when it is heated to a temperature close to or above the crystalline melting point of the highest melting point polymer component of the composition. This characteristic is necessary for the production of high temperature insulation materials and heat-shrinkable articles. In the latter case crosslinking imparts controlled shrinkage characteristics and renders the material resistant to melting when it is heated to the temperature necessary to effect shrinkage.

Several examples of crosslinked, polypropylene-containing polymer compositions are known in the prior art. U.S. Patent No. 6,569,915 describes heat-shrinkable articles which comprise a radiation-crosslinked composition based predominantly on polypropylene and also comprising an ethylene-propylene elastomer. U.S. Patent Nos. 6,455,637, 6,465,547 and 6,794,453 relate to articles comprised of moisture-crosslinked, predominantly polypropylene based compositions which also include amounts of silane-grafted polyolefin. The predominantly polypropylene-based compositions disclosed and claimed in these patents all have high rigidity, toughness and heat deformation resistance, making them suitable for use in demanding applications such as protective sleeves for high-temperature transmission pipelines where the operating temperature is typically in the range of 110-130°C, or above.

There are, however, situations where it is desirable to provide compositions and articles having rigidity, toughness and mechanical integrity similar to that of crosslinked polypropylene-based, compositions, but with moderated high-temperature capability as determined by those mechanical properties dependent upon the performance of the constituent polymers above their softening points. In this regard, it is known to provide radiation-crosslinked, polypropylene-containing polymer compositions which are predominantly based on medium, linear medium or high density polyethylene and lesser amounts of polypropylene homopolymers or copolymers. These types of compositions are disclosed in U.S. Patent No. 7,456,231. There remains a need, however, for moisture-crosslinked polypropylene-containing compositions with moderated high-temperature capability.

### SUMMARY OF THE INVENTION

According to the invention, there are provided moisture-crosslinkable polymer compositions and moisture-crosslinked articles prepared therefrom. The compositions and articles are predominantly based on combinations of polyethylene and polypropylene, wherein the polyethylene and polypropylene components are each present in the compositions and articles in amounts of less than 50 percent by weight. The inventors have found that articles according to the invention, after moisture-crosslinking, have rigidity and toughness similar to that of the prior art polypropylene-containing compositions described above, without the need for polypropylene as the predominant ingredient. These properties can be achieved, for example, by maintaining the polypropylene: polyethylene ratio in the composition similar to that contained in prior art compositions predominantly based on polypropylene. This is accomplished by reducing the content of both polypropylene and polyethylene to below 50 percent by weight of the composition. In addition, the compositions according to the invention offer enhanced extrusion processibility in terms of manufacturing throughput and control.

The moisture-crosslinked articles according to the invention are suitable for use in applications which demand a lesser degree of heat resistance than is typically the case for compositions predominantly comprised of polypropylene. More specifically, the moisture-crosslinked articles according to the invention are suitable for use at operating temperatures less than the softening points of the polyethylene and polypropylene components, typically up to about 110°C. Such articles include heat-shrinkable tubing products for the mechanical protection, strain relief and insulation of electrical and electronic splices, connections and terminations; and electrical insulation for wire and cable where high temperature toughness, rigidity and long-term thermal stability are important requirements.

The moisture-crosslinkable polymer composition comprises (a) less than 50 percent by weight of an ethylene-based polyolefin selected from the group comprising polyethylene homopolymers and copolymers of ethylene with olefins having from 3 to 20 carbon atoms; (b) less than 50 percent by weight of a propylene-based polyolefin selected from the group comprising polypropylene homopolymers and copolymers of propylene with other olefins; and (c) hydrolysable silane groups. The composition is predominantly based on a combined amount of the polyethylene-based polyolefin and the polypropylene-based polyolefin.

The invention provides a moisture-crosslinked, thermoset article. The article comprises a polymer composition, wherein the composition comprises (a) less than 50 percent by weight of an ethylene-based polyolefin, wherein the ethylene-based polyolefin contains hydrolysable silane groups and is selected from the group consisting of a polyethylene homopolymer grafted with an organic silane, a polyethylene copolymer grafted with an organic silane, a copolymer of an unsaturated ethylenic monomer with an organic silane, and mixtures thereof; (b) less than 50 percent by weight of a propylene-based polyolefin selected from the group consisting of a polypropylene homopolymer, a copolymer of propylene with another olefin, and mixtures thereof; and (c) a silanol condensation catalyst. The combined amount of the ethylene-based polyolefin and the propylene-based polyolefin is greater than 50% by weight of the composition; and the article is moisture crosslinked by hydrolysis of the silane groups.

In the moisture-crosslinked, thermoset article according to the invention, the article possesses a sufficient degree of crosslinking such that when the article is heated to a temperature above the crystalline melting point of the propylene-based polyolefin, it is softened but does not become liquid.

In the moisture-crosslinkable polymer compositions and the moisture-crosslinked, thermoset articles according to the invention, the combined amount of the ethylene-based polyolefin and the propylene-based polyolefin in the composition is greater than 50% by weight, for example from about 70% to about 95% by weight. The ethylene-based polyolefin may be present in the composition in an amount of from about 30% to about 48% by weight, and the propylene-based polyolefin may be present in the composition in an amount of from about 35% to about 48% by weight.

In the moisture-crosslinkable polymer compositions and the moisture-crosslinked, thermoset articles according to the invention, the ethylene-based polyolefin may comprise a polyethylene homopolymer or a polyethylene copolymer selected from the group comprising low density polyethylene (LDPE), high density polyethylene (HDPE), medium density polyethylene (MDPE), very low density polyethylene (VLDPE) and linear low density polyethylene (LLDPE).

In the moisture-crosslinkable polymer compositions and the moisture-crosslinked, thermoset articles according to the invention, the ethylene-based polyolefin may comprise a copolymer of ethylene with an olefin having from 3 to 20 carbon atoms, wherein the olefin having from 3 to 20 carbon atoms is selected from the group consisting of propylene, butene, hexene, octene, ethylidene norbornene, vinyl acetate, methyl acrylate, ethyl acrylate, butyl acrylate, and mixtures thereof, with the copolymer comprising from about 60% to about 95% by weight ethylene. For example, the ethylene-based polyolefin may comprise an ethylene-propylene elastomer or an ethylene-propylene-diene elastomer.

In the moisture-crosslinkable polymer compositions and the moisture-crosslinked, thermoset articles according to the invention, the propylene-based polyolefin may comprise a copolymer of propylene and ethylene comprising at least about 80% by weight propylene. The propylene-based polyolefin may comprise a propylene modified by reaction with a compound selected from the group consisting of silane, acrylic acid, methacrylic acid, acrylate, methacrylate, glycidyl methacrylate, anhydride, and mixtures thereof.

In the moisture-crosslinkable polymer compositions and the moisture-crosslinked, thermoset articles according to the invention, the hydrolysable silane groups may be incorporated into the composition by grafting an organic silane to a polyolefin component in the presence of a free-radical initiator. Therefore, compositions containing a silane-grafted polyolefin component further comprise a free radical initiator. The polyolefin component may comprise the ethylene-based polyefin or a blend of the ethylene-based polyolefin with at least a portion of the propylene-based polyolefin. Alternatively, the hydrolysable silane groups may be incorporated into the composition by copolymerization of an unsaturated ethylenic monomer with an organic silane.

The moisture-crosslinkable polymer compositions and the moisture-crosslinked, thermoset articles according to the invention may further comprise one or more optional ingredients selected from the group comprising pigmenting agents, mineral fillers, flame-retardant additives, antioxidants, UV stabilisers, lubricants and compatibilisers. Where a compatibiliser is added, it may be present in the composition in an amount of from about 5% to about 10% by weight, and may be selected from the group consisting of: ethylene-propylene diene elastomers; crystalline propylene-ethylene elastomers; thermoplastic polyolefin elastomers; metallocene polyolefins; cyclic olefin copolymers; polyoctenamers; ethylene-vinyl acetate copolymers; ethylene-vinyl alcohol copolymers; ethylene-alkyl acrylate copolymers; polybutenes; hydrogenated polybutadienes; non-hydrogenated polybutadienes; butyl rubber; polyolefins modified with reactive functional groups selected from the group comprising silanes, alcohols, amines, acrylic acids, methacrylic acids, acrylates, methacrylates, glycidyl methacrylates, and anhydrides; polyolefin ionomers; polyolefin nanocomposites; styrene-butadiene block copolymers; styrene-butadiene-styrene block copolymers; styrene-ethylene/propylene-styrene block copolymers; styrene-ethylene/butylene-styrene block copolymers; and mixtures thereof. For example, the compatibiliser may comprise a styrene-ethylene/butylene-styrene copolymer.

In the moisture-crosslinkable polymer compositions and the moisture-crosslinked, thermoset articles according to the invention, the weight ratio of the polypropylene-based polyolefin to the polyethylene-based polyolefin may be from about 1.6:1 to about 0.7:1, or from about 1.4:1 to about 0.9:1.

The moisture-crosslinked, thermoset articles according to the invention may have a gel fraction greater than about 25%, and may be heat shrinkable. For example, the article may be in the form of a heat-shrinkable tubing product such as insulation for wire or cable.

### DETAILED DESCRIPTION

The invention provides moisture-crosslinkable polymer compositions and moisture-crosslinked articles prepared therefrom. The compositions and articles of the invention are predominantly based on combinations of ethylene-based polyolefins and propylene-based polyolefins, each of which is contained in the compositions and articles in amounts of less than 50 percent by weight. The use of the term "predominantly" herein with reference to the compositions and articles according to the invention is intended to mean at least 50 percent by weight. Unless otherwise stated, all percentages mentioned herein are percentages by weight.

Suitable ethylene-based polyolefins for use in the compositions and articles of the invention include polyethylene homopolymers and copolymers of ethylene with an olefin other than ethylene having from 3 to 20 carbon atoms.

Polyethylene homopolymers and copolymers may be selected from low density polyethylene (LDPE), medium density polyethylene (MDPE), high density polyethylene (HDPE), linear low density polyethylene (LLDPE) and very low density polyethylene (VLDPE). The terms HDPE, LDPE, MDPE, VLDPE and LLDPE as used herein are defined in accordance with American Society for Testing and Materials (ASTM) Standard D 1248. HDPE and LLDPE are preferred in some embodiments of the invention.

Suitable copolymers of ethylene include those in which the olefin other than ethylene is selected from the group comprising propylene, butene, hexene, octene, ethylidene norbornene, vinyl acetate, methyl acrylate, ethyl acrylate and butyl acrylate. The copolymer of ethylene may also comprise an ethylene-propylene or ethylene-propylene-diene elastomer. The copolymers of ethylene are preferably prepared using metallocene catalysts, also known as single-site, stereo-specific or constrained geometry catalysts, and may also comprise a bimodal molecular weight distribution. In an embodiment of the invention, the ethylene-based polyolefin comprises an ethylene-octene copolymer polymerised using a so-called metallocene catalyst.

The ethylene-based polyolefin may comprise from about 50 to about 100% by weight ethylene, for example from about 60 to about 95% by weight ethylene, or from about 80 to about 95% by weight ethylene. The ethylene-based polyolefin may have a density of about 0.85 to 0.97 g/cm³, a melt flow index of about 0.1 to 10 dg/min and a crystalline melting point of at least about 120°C.

The ethylene-based polyolefin is present in the composition in an amount which is less than 50 percent by weight, while being sufficient for moisture-crosslinking of the article which is formed from the composition. Typically the amount of the ethylene-based polyolefin is greater than about 5 percent and less than 50 percent by weight, for example from about 5 percent to 48 percent by weight, from about 10 percent to 48 percent by weight, from about 20 percent to 48 percent by weight, from about 30 percent to 48 percent, or from 34 to 47 percent by weight.

Suitable propylene-based polyolefins for use in the compositions and articles of the invention include polypropylene homopolymers and copolymers of propylene with olefins other than propylene. Suitable polypropylene copolymers include copolymers of propylene and ethylene, and polypropylene modified with reactive functional groups, such as silanes, acrylic acids, methacrylic acids, acrylates, methacrylates, glycidyl methacrylates, and anhydrides. Where the propylene-based polyolefin is a polypropylene copolymer, it contains at least about 80% by weight propylene, for example about 90-95% propylene. In one embodiment of the invention, the propylene-based polyolefin is a copolymer comprising about 90-95% propylene and about 5-10% ethylene.

The propylene-based polyolefin may be isotactic in nature, having a density of about 0.85 to 0.91 g/cm³ and a melt flow index of about 0.1 to 10 dg/min. The melting point of the propylene-based polyolefin, as measured by DSC, may be at least about 145°C, or at least about 150°C, it being understood that the maximum melting point of polypropylene homopolymer is about 165°C, and may preferably be at least about 20°C above the operating temperature of the article into which the composition is formed.

The propylene-based polyolefin is present in the composition in an amount of greater than about 5 percent and less than 50 percent by weight, for example from about 5 percent to 48 percent by weight, from about 10 percent to 48 percent by weight, from about 20 percent to 48 percent by weight, from about 35 percent to 48 percent, or from 37 to 47 percent by weight.

As mentioned above, the compositions and articles according to the invention are based predominantly on a combination of the polyethylene-based and polypropylene-based polyolefins. Accordingly, the polyethylene-based and polypropylene-based polyolefins make up greater than 50% by weight of the compositions and articles according to the invention. In some embodiments of the invention, the polyethylene-based and polypropylene-based polyolefins comprise from about 65-95%, or from about 70-95%, or from about 75-90%, by weight of the compositions and articles according to the invention. It will be appreciated that the compositions and articles are defined herein as including the polyethylene-based and polypropylene-based polyolefins and all other essential and optional ingredients combined therewith. These other ingredients are now described below.

The ratio of the polyethylene-based and polypropylene-based polyolefins may also be varied in order to vary the properties of the articles produced according to the invention. In this regard, the weight ratio of polypropylene-based polyolefin : polyethylene-based polyolefin is typically within the range from about 5:1 to 1:5, more typically about 3:1 to 1:3, or about 2:1 to 1:2, or about 1.6:1 to 0.7:1. Where it is desired that the article has properties similar to predominantly polypropylene-based articles, the ratio of polypropylene-based polyolefin : polyethylene-based polyolefin is typically from about 0.9:1 to 1.5:1, or about 0.9:1 to about 1.4:1, or about 1:1 to about 1.4: 1.

The compositions and articles of the invention include a silane-modified polyolefin component, which comprises either a silane-grafted polyolefin or a silane-olefin copolymer. The process of chemically grafting silane molecules onto a polymer to form a silane-grafted resin, followed by catalysed hydrolysis and condensation of the silane, is a well known and established process, and is described in above-mentioned U.S. Patent No. 3,646,155. Preparation of silane-olefin copolymers is described in above-mentioned U.S. Patent No. 4,413,066.

Silane groups are introduced into the polyolefin component by reacting a polyolefin component, or monomeric precursors thereof, with an organic silane having the general formula RR'SiY₂ or RSiY₃; wherein R represents a monovalent olefinically unsaturated hydrocarbon or hydrocarbonoxy radical, Y represents a hydrolysable organic radical and R' represents a monovalent olefinically unsaturated hydrocarbon or hydrocarbonoxy radical, or a hydrolysable organic radical.

The monovalent olefinically unsaturated hydrocarbon or hydrocarbonoxy radical may be selected from the group comprising vinyl, allyl, butenyl, cyclohexenyl, cyclopentadienyl, or cyclohexadienyl radicals.

The hydrolysable organic radical is may be selected from the group comprising: alkoxy radicals such as methoxy, ethoxy and butoxy radicals; acyloxy radicals such as formyloxy, acetoxy and propionoxy radicals; oximo radicals such as - ON=C(CH₃)₂, -ON=CCH₃C₂H₅ and -ON=C(C₆H₅)₂; and substituted amino radicals selected from alkylamino and arylamino radicals such as -NHCH₃, -NHC₂H₅ and -NH(C₆H₅)₂.

In some embodiments, the organic silane has the general formula RSiY₃, R is a vinyl radical and Y is a methoxy or ethoxy radical. Examples of organic silanes having this composition are vinyltriethoxysilane and vinyltrimethoxysilane.

The amount of silane reacted with the polyolefin component depends in part upon the reaction conditions and the degree of modification desired in the polyolefin. The proportion may vary from about 0.1 to about 50% by weight based on the total weight of the silane-modified polyolefin component, and may be from about 0.5 to 10% by weight, or from about 1.0 to 2.5% by weight.

Where the silane-modified polyolefin component is a silane-grafted polyolefin, a free-radical initiator is blended with the polyolefin component and the organic silane to initiate the graft reaction. The free radical initiator may be an organic peroxide selected from the group comprising benzoyl peroxide, dichlorobenzoyl peroxide, dicumyl peroxide and di-tertiary butyl peroxide, with dicumyl peroxide being preferred in some embodiments of the invention. The criteria for choosing an appropriate free-radical initiator are known to persons skilled in the art and are described in the above-mentioned U.S. Patent No. 3,646,155 and will not be repeated here. The free-radical initiator may be added in an amount of from about 0.1 to about 1.0% by weight of the silane-modified polyolefin component, more preferably from about 0.05 to 0.2% by weight.

Silane-grafted polyolefins are formed by reacting the silane, the polyolefin component and the free-radical initiator above the melting point of the polyolefins contained therein, under conditions in which the polyolefin component is subjected to mechanical working, according to processes known to those skilled in the art. Where the silane-modified polyolefin component comprises a silane-grafted polyolefin, the polyolefin component comprises the ethylene-based polyolefin and optionally at least a portion of the propylene-based polyolefin.

Silane-olefin copolymers are prepared by polymerizing an unsaturated ethylenic monomer with an unsaturated silane monomer containing one or more hydrolysable groups, preferably an organic silane as described above, such as vinyltrimethoxy silane.

The silane-modified polyolefin component is subsequently melt-processed with a silanol condensation catalyst to produce a shaped article according to the invention.

Where the silane-modified polyolefin component either does not include an amount of the propylene-based polyolefin, or where it is desired to increase the amount of the propylene-based polyefin in the composition, an amount of the propylene-based polyolefin is also added to the mixture to be melt-processed. It will be appreciated, however, that the total amount of the propylene-based polyolefin contained in the composition, and in the shaped article, does not exceed the amounts set out above, regardless of whether or not any of the propylene-based polyolefin is included in the silane-grafted polyolefin.

The silanol condensation catalyst may be selected from the group comprising organic bases, carboxylic acids and organometallic compounds including organic titanates and complexes or carboxylates of lead, cobalt, iron, nickel, zinc and tin. For example, the catalyst may be selected from the group comprising dibutyltin dilaurate, dibutyltin diacetate, dibutyltin octanoate, dioctyltin maleate, dibutyltin oxide and titanium compounds such as titanium-2-ethylhexoxide. In some embodiments of the invention, the silanol condensation catalyst is dibutyltin dilaurate, although any material which will catalyse the silane condensation reaction can be used. The silanol condensation catalyst may be added in an amount of from about 0.01 to about 1 percent by weight of the coating material, for example about 0.05 to about 0.5 percent by weight, or about 0.1 to 0.2 percent by weight.

The composition may further comprise one or more optional ingredients selected from the group comprising pigmenting agents, mineral fillers, flame-retardant additives, antioxidants, UV stabilisers, lubricants and compatibilisers.

The optional compatibiliser may be selected from one or more members of the group comprising: any of the ethylene-based polyolefins and propylene-based polyolefins described above; ethylene-propylene diene elastomers; crystalline propylene-ethylene elastomers; thermoplastic polyolefin elastomers; metallocene polyolefins; cyclic olefin copolymers; polyoctenamers; copolymers of ethylene with vinyl acetate, vinyl alcohol, and/or alkyl acrylates; polybutenes; hydrogenated and non-hydrogenated polybutadienes; butyl rubber; polyolefins modified with reactive functional groups selected from the group comprising silanes, alcohols, amines, acrylic acids, methacrylic acids, acrylates, methacrylates, glycidyl methacrylates, and anhydrides; polyolefin ionomers; polyolefin nanocomposites; and block copolymers selected from the group comprising styrene-butadiene, styrene-butadiene-styrene, styrene-ethylene/propylene and styrene-ethylene/butylene-styrene.

In any given composition according to the invention, the compatibiliser is different from the ethylene-based polyolefin and propylene-based polyolefin components of that particular composition. Furthermore, where the compatibiliser comprises an ethylene-based polyolefin and/or a propylene-based polyolefin as defined above, the amount of compatibiliser present in the composition is such that the total amounts of the ethylene-based polyolefin and propylene-based polyolefin in the composition fall within the ranges described above for these components.

The compatibiliser may be added to the composition in an amount of up to about 25 percent by weight, for example up to about 15 percent, or from about 5 to about 10 percent by weight of the composition. The function of the compatibiliser is primarily to promote miscibility of the ethylene-based polyolefin and the propylene-based polyolefin when they are blended together, such that the blend exhibits homogeneous behaviour during use. Addition of the compatibiliser may not be required where the other components of the composition exhibit satisfactory natural miscibility or performance. The compatibiliser may be added to the composition either during preparation of the silane-grafted polyolefin component, i.e. by blending it with the polyolefin component, the organic silane and the free-radical initiator. Alternatively, the compatibiliser may be blended with the silane-modified polyolefin component and the silanol condensation catalyst prior to or during melt-processing.

The antioxidant stabiliser may be chosen from any suitable antioxidant or blend of antioxidants designed to prevent degradation of the composition during melt processing and subsequent heat aging of the final product. Examples of suitable antioxidants and heat stabilisers include those classes of chemicals known as hindered phenols, hindered amines, phosphites, bisphenols, benzimidazoles, phenylenediamines, and, dihydroquinolines. These may be added in amounts of about 0.1 to 5% by weight of the composition, depending upon the aging properties required and the type and quantity of optional destabilizing ingredients in the composition, for example halogenated flame retardants or mineral fillers.

Subjecting the shaped article to moisture, preferably at an elevated temperature, will induce crosslinking of the silane groups via a combined hydrolysis and condensation reaction. Atmospheric moisture is usually sufficient to permit the crosslinking to occur, but the rate of crosslinking may be increased by the use of an artificially moistened atmosphere, or by immersion in liquid water. For example, crosslinking may be effected at temperature above 50°C, such as by exposing the article to a temperature of 85°C and a relative humidity of 90% for approximately 100 hours.

The degree of crosslinking is sufficient to provide the crosslinked article with a gel fraction of at least about 25%, for example in the range from about 25-40%. When the article is crosslinked to this degree, subsequent heating of the article to a temperature above the crystalline melting point of the ethylene-based polyolefin or the propylene-based polyolefin, whichever is higher, results in the article becoming softened but not melting, i.e. the article does not become liquid. Thus, crosslinking provides the articles according to the invention with thermoset properties, i.e. they are thermoset.

The following is a description of an exemplary method for producing a moisture-crosslinked article according to the invention containing a silane-grafted polyolefin component.

The polyolefin component, the silane, a peroxide free-radical initiator, an optional processing stabiliser and an optional compatibiliser are pre-blended and passed through an extruder at a temperature above the melting point of the polyolefin and above the decomposition temperature of the peroxide, in order to accomplish grafting of the silane onto the polyolefin. The polyolefin is either comprised wholly of an ethylene-based polyolefin or a combination of an ethylene-based polyolefin and a propylene-based polyolefin. The grafted material is then passed through a multi-strand die into a trough of cooled water, subsequently chopped into pellets with a strand pelletizer, and dried.

The grafted polyolefin pellets are then blended with a silane condensation catalyst, an antioxidant stabiliser, and optionally with one or more of the optional ingredients described above. Also, where the grafted material does not already include a propylene-based polyolefin; or where the grafted material includes an amount of propylene-based polyolefin and it is desired to increase the polypropylene content of the composition to a level greater than that of the grafted material, an amount of the propylene-based polyolefin may be blended with the grafted material at this stage. The resulting mixture is then melt processed to form a shaped article.

Melt processing of the composition may be performed by techniques commonly used in the industry such as extrusion or molding. Examples of extruded articles include sheet, tubing and electrical insulation. In some embodiments, the composition may be co-extruded or laminated with another material of similar or dissimilar composition to form a laminate structure having discrete but intimately bonded layers, with each layer having different functional properties. For example, an adhesive-coated polymer sheet can be produced by co-extruding or laminating the composition with an adhesive. In other examples, the composition may be laminated with a less expensive or non-crosslinkable layer. Molded articles can be produced by injection, compression or blow molding and examples include electrical insulating articles such as end caps and break-out boots.

The shaped article is then exposed to moisture, preferably at an elevated temperature, to effect crosslinking. The crosslinked article exhibits the property of softening but not becoming liquid when re-heated close to or above the crystalline melting point of the highest melting polyolefin component, which is typically the propylene-based polyolefin component. Thus, the articles according to the invention exhibit thermoset properties.

Heat-shrinkability can be imparted to crosslinked articles according to the invention by first heating the article close to or above the crystalline melting point of the highest-melting polyolefin component, stretching the softened article beyond its original shaped dimensions without rupture using relatively low forces, and then fixing the article in its stretched state by cooling it rapidly to below the crystalline melting point using a cooling medium such as air, water or other heat-transfer medium. Stretching can be accomplished by mechanical, pneumatic or hydraulic means. After cooling, the stretched crosslinks are held in a stable state by the reformed, solid crystalline regions of the polyolefin components, thereby preventing the article from spontaneously recovering its original dimensions. Subsequent reheating of the stretched article above the melting point of the highest melting point component will cause the crystalline regions to re-melt and the structure to elastomerically recover to its original unstretched dimensions. The crosslinked structure provides the initial recovery force and again ensures that the article does not melt and that it maintains its mechanical integrity.

The invention is further illustrated by the following examples. Examples 1 to 3 and Table 1 relate to the preparation of silane-grafted resin formulations for incorporation into the compositions according to the invention.

### EXAMPLE 1

A silane-grafted resin blend was prepared by tumble blending 50 parts by weight of a propylene-ethylene copolymer; 50 parts by weight of a HDPE homopolymer; 2 parts by weight of a silane, along with an organic peroxide initiator and a processing stabiliser. All components of the blend are commercially available. The blend was melt processed through a 30:1 L/D extruder designed to provide the required mixing efficiency and residence time for effective grafting, at a melt temperature above the melting point of the polypropylene component. The extruded composition was passed into a trough of cooled water, subsequently chopped into pellets with a strand pelletizer, and dried.

### EXAMPLE 2

A silane-grafted resin blend was prepared by tumble blending 80 parts by weight of a HDPE homopolymer; 20 parts by weight of a styrenic block copolymer as a compatibiliser; 2 parts by weight of a silane, along with an organic peroxide initiator and a processing stabiliser. All components of the blend are commercially available. The blend was melt processed and pelletized as described above in Example 1, with the melt processing temperature being greater than the melting point of the HDPE homopolymer.

### EXAMPLE 3

A silane-grafted resin blend was prepared by tumble blending 100 parts by weight of a HDPE homopolymer and 2 parts by weight of a silane, along with an organic peroxide initiator and a processing stabiliser. All components of the blend are commercially available. The blend was melt processed and pelletized as described above in Example 1, with the melt processing temperature being greater than the melting point of the HDPE homopolymer.

**TABLE 1**

| | Example 1 | Example 2 | Example 3 |
|---|---|---|---|
| Polypropylene^{(A)} | 50 | 0 | 0 |
| Polyethylene^{(B)} | 50 | 80 | 100 |
| Compatibiliser^{(C)} | 0 | 20 | 0 |
| Silane^{(D)} | 2 | 2 | 2 |
| Peroxide^{(E)} | 0.084 | 0.084 | 0.084 |
| Antioxidant ^{(F)} | 2.66 | 2.9 | 2.9 |
| Silane Carrier^{(G)} | 2.084 | 2.084 | 2.084 |
| Total (parts by weight) | 106.828 | 107.068 | 107.068 |

| | | | |
|---|---|---|---|
| (A): copolymer of 90-95% propylene and 5-10% ethylene (B): HDPE homopolymer having density of 0.960 g/cm³ and a melt index of 5.0 dg/min (C): linear styrene-ethylene/butylene-styrene block copolymer with a polystyrene content of 13% (D): vinyltrimethoxysilane (E): dicumyl peroxide (F): hindered phenol antioxidant (G): porous resin carrier for silane | | | |

### EXAMPLE 4

This example describes the production of a moisture-crosslinked, extruded sheet according to the invention.

The pellets produced in Example 1, predominantly comprised of a silane-grafted blend of polyethylene and polypropylene, were blended with additional ingredients as described below in Table 2 in the amounts indicated. In particular, 100 parts by weight of the grafted pellets were blended with a total of 7.5 parts by weight of compatibiliser, 14 parts by weight antioxidant, 1.5 parts by weight catalyst and 0.5 parts by weight black pigment. On a percentage basis, the total content of polypropylene in the composition was 37.89 percent by weight and the total polyethylene content was also 37.89 percent by weight, with other ingredients comprising 24.21 percent by weight of the composition.

The combined ingredients were fed at a melt temperature of approximately 180°C through a 24:1 L/D single screw extruder equipped with a single layer sheet die. The extruded sheet was fixed to the required dimensions of width and thickness by passing it through a cooled, 3-roll calendering stack, then wound onto reels.

The sheet was crosslinked by conditioning the reeled sheet at a temperature of 85°C and a relative humidity of 90% for approximately 100 hours. This crosslinked sheet was then tested to determine the degree of crosslinking and for mechanical properties as indicated in Table 3.

### EXAMPLE 5

This example describes the production of a moisture-crosslinked, extruded sheet according to the invention.

The pellets produced in Example 1, predominantly comprised of a silane-grafted blend of polyethylene and polypropylene, were blended with additional ingredients as described below in Table 2 in the amounts indicated. In particular, 100 parts by weight of the grafted pellets were blended with 14 parts by weight antioxidant, 1.5 parts by weight catalyst and 0.5 parts by weight black pigment. On a percentage basis, the total content of polypropylene in the composition was 40.34 percent by weight and the total polyethylene content was also 40.34 percent by weight, with other ingredients comprising 19.31 percent by weight of the composition.

The combined ingredients were formed into an extruded sheet and moisture-crosslinked as described in Example 4, and the mechanical properties of the crosslinked sheet are set out in Table 3.

### EXAMPLE 6

This example describes the production of a moisture-crosslinked, extruded sheet according to the invention.

The pellets produced in Example 2, predominantly comprising a silane-grafted polyethylene homopolymer, were blended with additional ingredients as described below in Table 2, in the amounts indicated. In particular, 50 parts by weight of the silane-grafted pellets were blended with 50 parts by weight of the copolymer of 90-95% propylene and 5-10% ethylene used in Example 1; 7.5 parts by weight antioxidant, 1.5 parts by weight catalyst and 0.5 parts by weight black pigment. On a percentage basis, the total content of polypropylene in the composition was 45.66 percent by weight and the total polyethylene content was 34.12 percent by weight, with other ingredients comprising 20.22 percent by weight of the composition.

The combined ingredients were formed into an extruded sheet and moisture-crosslinked as described in Example 4, and the mechanical properties of the crosslinked sheet are set out in Table 3.

### EXAMPLE 7

The pellets produced in Example 3, predominantly comprising a silane-grafted polyethylene homopolymer, were blended with additional ingredients as described below in Table 2, in the amounts indicated. In particular, 50 parts by weight of the silane-grafted pellets were blended with 50 parts by weight of the copolymer of 90-95% propylene and 5-10% ethylene used in Example 1; 7.5 parts by weight antioxidant, 1.5 parts by weight catalyst and 0.5 parts by weight black pigment. On a percentage basis, the total content of polypropylene in the composition was 45.66 percent by weight and the total polyethylene content was 42.65 percent by weight, with other ingredients comprising 11.69 percent by weight of the composition.

The combined ingredients were formed into an extruded sheet and moisture-crosslinked as described in Example 4, and the mechanical properties of the crosslinked sheet are set out in Table 3.

### EXAMPLE 8

This example is the same as Example 7 except that the composition was formulated with 55 parts by weight of the silane-grafted pellets of Example 3 and 45 parts by weight of the propylene-ethylene copolymer of Example 1. On a percentage basis, the total content of polypropylene in the composition was 41.09 percent by weight and the total polyethylene content was 46.91 percent by weight, with other ingredients comprising 12.00 percent by weight of the composition.

**TABLE 2**

| | Example 4 | Example 5 | Example 6 | Example 7 | Example 8 |
|---|---|---|---|---|---|
| Grafted Resin | 100 | 100 | 0 | 0 | 0 |
| (Ex. 1) | | | | | |
| Grafted Resin | 0 | 0 | 50 | 0 | 0 |
| (Ex. 2) | | | | | |
| Grafted Resin | 0 | 0 | 0 | 50 | 55 |
| (Ex. 3) | | | | | |
| Polypropylene^{(A)} | 0 | 0 | 50 | 50 | 45 |
| Compatibiliser^{(B)} | 7.5 | 0 | 0 | 0 | 0 |
| Antioxidant^{(C)} | 14 | 14 | 7.5 | 7.5 | 7.5 |
| Catalyst^{(D)} | 1.5 | 1.5 | 1.5 | 1.5 | 15 |
| Black Pigment | 0.5 | 0.5 | 0.5 | 0.5 | 0.5 |
| Total | 123.5 | 116 | 109.5 | 109.5 | 109.5 |

| | | | | | |
|---|---|---|---|---|---|
| (A): copolymer of 90-95% propylene and 5-10% ethylene (B): in Example 4, compatibiliser is a combination of 5.0 parts by weight of a linear styrene-ethylene/butylene-styrene block copolymer with a polystyrene content of 13%, and 2.5 parts by weight of a thermoplastic elastomer (vulcanizate) comprised of polypropylene and partially crosslinked EPDM rubber. (C): hindered phenol antioxidant (D): dibutyltin dilaurate catalyst | | | | | |

**TABLE 3**

| Property | Example 4 | Example 5 | Example 6 | Example 6 | Example 7 |
|---|---|---|---|---|---|
| Gel Fraction (%)^{(A)} | 38 | 39 | 28 | 30 | 34 |
| Hot Tensile Strength (psi)^{(B)} | 37 | 45 | 37 | 42 | 40 |
| Hot Elongation (%)^{(C)} | 140 | 70 | 90 | 80 | 90 |
| Ultimate Tensile Strength (psi) | 4450 | 4520 | 5210 | 5340 | 4930 |
| Ultimate Elongation (%) | 450 | 450 | 540 | 530 | 510 |

| | | | | | |
|---|---|---|---|---|---|
| (A) Degree of crosslinking (B) At 200°C and 100% Elongation (C) At 200°C | | | | | |

Although the invention has been described in relation to certain specific embodiments, it will be appreciated that it is not intended to be limited thereto. Rather, the invention is intended to cover all embodiments which fall within the scope of the following claims.

## Claims

1. A moisture-crosslinked, thermoset article comprising a polymer composition, wherein said composition comprises:
(a) less than 50 percent by weight of an ethylene-based polyolefin, wherein said ethylene-based polyolefin contains hydrolysable silane groups and is selected from the group consisting of a polyethylene homopolymer grafted with an organic silane, a polyethylene copolymer grafted with an organic silane, a copolymer of an unsaturated ethylenic monomer with an organic silane, and mixtures thereof;
(b) less than 50 percent by weight of a propylene-based polyolefin selected from the group consisting of a polypropylene homopolymer, a copolymer of propylene with another olefin, and mixtures thereof; and
(c) a silanol condensation catalyst;
wherein a combined amount of said ethylene-based polyolefin and said propylene-based polyolefin is greater than 50% by weight of said composition; and
wherein the article is moisture crosslinked by hydrolysis of said silane groups.

2. The moisture-crosslinked article according to claim 1, wherein the article possesses a sufficient degree of crosslinking such that when the article is heated to a temperature above the crystalline melting point of the propylene-based polyolefin, it is softened but does not become liquid.

3. The moisture-crosslinked article according to any preceding claim, wherein said combined amount of said ethylene-based polyolefin and said propylene-based polyolefin in said composition is from 70-95% by weight.

4. The moisture-crosslinked article according to any preceding claim, wherein said polyethylene homopolymer is selected from the group consisting of low density polyethylene (LDPE), high density polyethylene (HDPE), medium density polyethylene (MDPE), very low density polyethylene (VLDPE), linear low density polyethylene (LLDPE), and mixtures thereof.

5. The moisture-crosslinked article according to any preceding claim, wherein polyethylene copolymer comprises a copolymer of ethylene with an olefin having from 3 to 20 carbon atoms;
wherein said olefin having from 3 to 20 carbon atoms is selected from the group consisting of propylene, butene, hexene, octene, ethylidene norbornene, vinyl acetate, methyl acrylate, ethyl acrylate, butyl acrylate, and mixtures thereof; and wherein said polyethylene copolymer comprises from 60 to 95% by weight ethylene.

6. The moisture-crosslinked article according to claim 5, wherein said copolymer of ethylene with an olefin having from 3 to 20 carbon atoms is an ethylene-propylene elastomer or an ethylene-propylene-diene elastomer.

7. The moisture-crosslinked article according to any any preceding claim,
wherein said ethylene-based polyolefin is present in said composition in an amount of from 30-48% by weight.

8. The moisture-crosslinked article according to any any preceding claim,
wherein said propylene-based polyolefin comprises a copolymer of propylene and ethylene comprising at least 80% by weight propylene.

9. The moisture-crosslinked article according to any preceding claim, wherein said propylene-based polyolefin comprises a propylene modified by reaction with a compound selected from the group consisting of silane, acrylic acid, methacrylic acid, acrylate, methacrylate, glycidyl methacrylate, anhydride, and mixtures thereof.

10. The moisture-crosslinked article according to any preceding claim, wherein said propylene-based polyolefin is present in said composition in an amount of from 35-48% by weight.

11. The moisture-crosslinked article according to any preceding claim, further comprising one or more ingredients selected from the group consisting of pigmenting agents, mineral fillers, flame-retardant additives, antioxidants, UV stabilisers and lubricants .

12. The moisture-crosslinked article according to any preceding claim, wherein the polymer composition includes a compatiliser selected from the group consisting of: ethylene-propylene diene elastomers; crystalline propylene-ethylene elastomers; thermoplastic polyolefin elastomers; metallocene polyolefins; cyclic olefin copolymers; polyoctenamers; ethylene-vinyl acetate copolymers; ethylene-vinyl alcohol copolymers; ethylene-alkyl acrylate copolymers; polybutenes; hydrogenated polybutadienes; non-hydrogenated polybutadienes; butyl rubber; polyolefins modified with reactive functional groups selected from the group comprising silanes, alcohols, amines, acrylic acids, methacrylic acids, acrylates, methacrylates, glycidyl methacrylates, and anhydrides; polyolefin ionomers; polyolefin nanocomposites; styrene-butadiene block copolymers; styrene-butadiene-styrene block copolymers; styrene-ethylene/propylene-styrene block copolymers; styrene-ethylene/butylene-styrene block copolymers; and mixtures thereof;
wherein the compatibiliser is present in the composition in an amount of from 5-10% by weight; and
where the compatibiliser comprises an ethylene-based polyolefin and /or a propylene-based polyolefin as defined in any preceding claim, the amount of compatibliser present in the polymer composition is such that the total amounts of the ethylene-based polyolefin and the propylene-based polyolefin in the composition fall within the amounts as defined in any preceding claim.

13. The moisture-crosslinked article according to claim 12, wherein the compatibiliser comprises a styrene-ethylene/butylene-styrene block copolymer.

14. The moisture-crosslinked article according to any preceding claim, wherein a weight ratio of the propylene-based polyolefin to the ethylene-based polyolefin is from 1.6:1 to 0.7:1, for example from 1.4:1 to 0.9:1.

15. The moisture-crosslinked article according to any preceding claim, wherein the article is heat shrinkable.

## Patentansprüche

1. Feuchtigkeitsvernetzter, hitzegehärteter Artikel, der eine Polymerzusammensetzung umfasst, wobei die genannte Zusammensetzung Folgendes umfasst:
(a) weniger als 50 Gew.-% eines Ethylen-basierten Polyolefins, wobei das genannte Ethylen-basierte Polyolefin hydrolysierbare Silangruppen enthält und ausgewählt ist aus der Gruppe bestehend aus einem mit einem organischen Silan gepfropft enPolyethylenhomopolymer, einem mit einem organischen Silan gepfropften Polyethylencopolymer, einem Copolymer eines ungesättigten ethylenischen Monomers mit einem organischen Silan, und Gemischen davon;
(b) weniger als 50 Gew.-% eines Propylen-basierten Polyolefins, das ausgewählt ist aus der Gruppe bestehend aus einem Polypropylenhomopolymer, einem Copolymer von Propylen mit einem anderen Olefin und Gemischen davon; und
(c) einen Silanolkondensationskatalysator;
wobei eine kombinierte Menge des genannten Ethylen-basierten Polyolefins und des genannten Propylen-basierten Polyolefins größer ist als 50 Gew.-% der genannten Zusammensetzung; und
wobei der Artikel feuchtigkeitsvernetzt wird durch Hydrolyse der genannten Silangruppen.

2. Feuchtigkeitsvernetzter Artikel nach Anspruch 1, wobei der Artikel einen ausreichenden Grad an Vernetzung aufweist, so dass der Artikel, wenn er auf eine Temperatur über dem kristallinen Schmelzpunkt des Propylen-basierten Polyolefins erhitzt wird, erweicht, aber nicht flüssig wird.

3. Feuchtigkeitsvernetzter Artikel nach einem der vorherigen Ansprüche, wobei die genannte kombinierte Menge des genannten Ethylen-basierten Polyolefins und des genannten Propylen-basierten Polyolefins in der genannten Zusammensetzung bei 70-95 Gew.-% liegt.

4. Feuchtigkeitsvernetzter Artikel nach einem der vorherigen Ansprüche, wobei das genannte Polyethylenhomopolymer ausgewählt ist aus der Gruppe bestehend aus Polyethylen niedriger Dichte (LDPE), Polyethylen hoher Dichte (HDPE), Polyethylen mittlerer Dichte (MDPE), Polyethylen sehr niedriger Dichte (VLDE), linearem Polyethylen niedriger Dichte (LLDPE) und Gemischen davon.

5. Feuchtigkeitsvernetzter Artikel nach einem der vorherigen Ansprüche, wobei Polyethylencopolymer ein Copolymer von Ethylen mit einem Olefin mit 3 bis 20 Kohlenstoffatomen umfasst;
wobei das genannte Olefin mit 3 bis 20 Kohlenstoffatomen ausgewählt ist aus der Gruppe bestehend aus Propylen, Buten, Hexen, Octen, Ethylidennorbornen, Vinylacetat, Methylacrylat, Ethylacrylat, Butylacrylat und Gemischen davon; und wobei das genannte Polyethylencopolymer 60 bis 95 Gew.-% Ethylen umfasst.

6. Feuchtigkeitsvernetzter Artikel nach Anspruch 5, wobei das genannte Copolymer von Ethylen mit einem Olefin mit 3 bis 20 Kohlenstoffatomen ein Ethylen-Propylen-Elastomer oder ein Ethylen-Propylen-Dien-Elastomer ist.

7. Feuchtigkeitsvernetzter Artikel nach einem der vorherigen Ansprüche, wobei das genannte Ethylen-basierte Polyolefin in der genannten Zusammensetzung in einer Menge von 30-48 Gew.-% vorliegt.

8. Feuchtigkeitsvernetzter Artikel nach einem der vorherigen Ansprüche, wobei das genannte Propylen-basierte Polyolefin ein Copolymer von Propylen und Ethylen umfasst, das wenigstens 80 Gew.-% Propylen umfasst.

9. Feuchtigkeitsvernetzter Artikel nach einem der vorherigen Ansprüche, wobei das genannte Propylen-basierte Polyolefin ein Propylen umfasst, das durch Reagieren mit einer Verbindung modifiziert ist, die ausgewählt ist aus der Gruppe bestehend aus Silan, Acrylsäure, Methacrylsäure, Acrylat, Methacrylat, Glycidylmethacrylat, Anhydrid und Gemischen davon.

10. Feuchtigkeitsvernetzter Artikel nach einem der vorherigen Ansprüche, wobei das genannte Propylen-basierte Polyolefin in der genannten Zusammensetzung in einer Menge von 35-48 Gew.-% vorliegt.

11. Feuchtigkeitsvernetzter Artikel nach einem der vorherigen Ansprüche, der ferner einen oder mehrere Bestandteile umfasst, die ausgewählt sind aus der Gruppe bestehend aus Pigmentierungsmitteln, mineralischen Füllstoffen, flammenhemmenden Zusatzstoffen, Antioxidationsmitteln, UV-Stabilisatoren und Schmiermitteln.

12. Feuchtigkeitsvernetzter Artikel nach einem der vorherigen Ansprüche, wobei die Polymerzusammensetzung einen Verträglichkeitsvermittler enthält, der ausgewählt ist aus der Gruppe bestehend aus: Ethylen-Propylen-Dien-Elastomeren; kristallinen Propylen-Ethylen-Elastomeren; thermoplastischen Polyolefinelastomeren; Metallocenpolyolefinen; cyclischen Olefincopolymeren; Polyoctenameren; Ethylen-Vinylacetat-Copolymeren; EthylenVinylalkohol-Copolymeren; Ethylen-Alkylacrylat-Copolymeren; Polybutenen; hydrierten Polybutadienen; nicht hydrierten Polybutadienen; Butylkautschuk; Polyolefinen, die mit reaktiven funktionellen Gruppen modifiziert sind, die ausgewählt sind aus der Gruppe bestehend aus Silanen, Alkoholen, Aminen, Acrylsäuren, Methacrylsäuren, Acrylaten, Methacrylaten, Glycidylmethacrylaten und Anhydriden; Polyolefinionomeren; Polyolefinnanoverbundstoffen; StyrolButadien-Blockcopolymeren; Styrol-Butadien-Styrol-Blockcopolymeren; Styrol-Ethylen/Propylen-Styrol-Blockcopolymeren; Styrol-Ethylen/Butylen-Styrol-Blockcopolymeren; und Gemischen davon;
wobei der Verträglichkeitsvermittler in der Zusammensetzung in einer Menge von 5-10 Gew.-% vorliegt; und
wobei der Verträglichkeitsvermittler ein Ethylenbasiertes Polyolefin und/oder ein Propylen-basiertes Polyolefin wie in einem der vorherigen Ansprüche definiert umfasst, wobei die Menge des in der Polymerzusammensetzung vorliegenden Verträglichkeitsvermittlers derart ist, dass die Gesamtmengen des Ethylen-basierten Polyolefins und des Propylen-basierten Polyolefins in der Zusammensetzung innerhalb der in einem der vorherigen Ansprüche definierten Mengen liegen.

13. Feuchtigkeitsvernetzter Artikel nach Anspruch 12, wobei der Verträglichkeitsvermittler ein Styrol-Ethylen/Butylen-Styrol-Blockcopolymer umfasst.

14. Feuchtigkeitsvernetzter Artikel nach einem der vorherigen Ansprüche, wobei das Gewichtsverhältnis zwischen Propylen-basiertem Polyolefin und Ethylen-basiertem Polyolefin bei 1,6:1 bis 0,7:1, z.B. 1,4:1 bis 0,9:1 liegt.

15. Feuchtigkeitsvernetzter Artikel nach einem der vorherigen Ansprüche, wobei der Artikel hitzeschrumpfbar ist.

## Revendications

1. Article thermodurci réticulé par l'humidité, comprenant une composition de polymères, dans lequel ladite composition comprend :
(a) moins de 50 pour cent en poids d'une polyoléfine à base d'éthylène, où ladite polyoléfine à base d'éthylène contient des groupes silanes hydrolysables et est sélectionnée parmi le groupe consistant en un homopolymère de polyéthylène greffé avec un silane organique, un copolymère de polyéthylène greffé avec un silane organique, un copolymère d'un monomère éthylénique insaturé et d'un silane organique et des mélanges de ceux-ci;
(b) moins de 50 pour cent en poids d'une polyoléfine à base de propylène sélectionnée parmi le groupe consistant en un homopolymère de polypropylène, un copolymère de propylène avec une autre oléfine et des mélanges de ceux-ci; et
(c) un catalyseur de condensation au silanol;
dans lequel une quantité combinée de ladite polyoléfine à base d'éthylène et de ladite polyoléfine à base de propylène, est supérieure à 50% en poids de ladite composition; et dans lequel l'article est réticulé par l'humidité par l'hydrolyse desdits groupes silanes.

2. Article réticulé par l'humidité selon la revendication 1, dans lequel l'article possède un degré de réticulation suffisant pour que, lorsque l'article est chauffé à une température plus élevée que le point de fusion cristallin de la polyoléfine à base de propylène, il est ramolli mais ne devient pas liquide.

3. Article réticulé par l'humidité selon l'une quelconque des revendications précédentes, dans lequel ladite quantité combinée de ladite polyoléfine à base d'éthylène et de ladite polyoléfine à base de propylène dans ladite composition, est de 70-95% en poids.

4. Article réticulé par l'humidité selon l'une quelconque des revendications précédentes, dans lequel ledit homopolymère de polyéthylène est sélectionné parmi le groupe consistant en polyéthylène basse densité (PEBD), polyéthylène haute densité (PEHD), polyéthylène moyenne densité (PEMD), polyéthylène à très basse densité (PEtBD), polyéthylène à basse densité linéaire (PEBD1) et des mélanges de ceux-ci.

5. Article réticulé par l'humidité selon l'une quelconque des revendications précédentes, dans lequel le copolymère comprend un copolymère d'éthylène avec une oléfine ayant de 3 à 20 atomes de carbone;
dans lequel ladite oléfine ayant de 3 à 20 atomes de carbone est sélectionnée parmi le groupe consistant en propylène, butène, hexène, octène, éthylidène norbomène, acétate de vinyle, acrylate de méthyle, acrylate d'éthyle, acrylate de butyle et des mélanges de ceux-ci; et dans lequel ledit copolymère de polyéthylène comprend de 60 à 95% en poids d'éthylène.

6. Article réticulé par l'humidité selon la revendication 5, dans lequel ledit copolymère d'éthylène avec une oléfine ayant de 3 à 20 atomes de carbone est un élastomère d'éthylène-propylène ou un élastomère d'éthylène-propylène-diène.

7. Article réticulé par l'humidité selon l'une quelconque des revendications précédentes, dans lequel ladite polyoléfine à base d'éthylène est présente dans ladite composition en une quantité de 30-48% en poids.

8. Article réticulé par l'humidité selon l'une quelconque des revendications précédentes, dans lequel ladite polyoléfine à base de propylène comprend un copolymère de propylène et d'éthylène comprenant au moins 80% en poids de propylène.

9. Article réticulé par l'humidité selon l'une quelconque des revendications précédentes, dans lequel ladite polyoléfine à base de propylène comprend un propylène modifié par réaction avec un composé sélectionné parmi le groupe consistant en silane, acide acrylique, acide méthacrylique, acrylate, méthacrylate, méthacrylate de glycidyle, anhydride et des mélanges de ceux-ci.

10. Article réticulé par l'humidité selon l'une quelconque des revendications précédentes, dans lequel ladite polyoléfine à base de propylène est présente dans ladite composition en une quantité de 35-48% en poids.

11. Article réticulé par l'humidité selon l'une quelconque des revendications précédentes, comprenant en plus un ou plusieurs ingrédients sélectionnés parmi le groupe consistant en agents de pigmentation, matières de charge minérales, additifs ignifuges, stabilisants UV et lubrifiants.

12. Article réticulé par l'humidité selon l'une quelconque des revendications précédentes, dans lequel la composition de polymères comprend un agent de compatibilité sélectionné parmi le groupe consistant en: élastomères d'éthylène-propylène-diène; élastomères cristallins de propylène-éthylène; élastomères thermoplastiques de polyoléfine; polyoléfines métallocènes; copolymères d'oléfines cycliques; polyocténamères; copolymères d'éthylène-acétate de vinyle; copolymères d'éthylène-alcool vinylique; copolymères d'éthylène-acrylate d'alkyle; polybutènes; polybutadiènes hydrogénés; polybutadiènes non hydrogénés; caoutchouc butylique; polyoléfines modifiées avec des groupes fonctionnels réactifs sélectionnés parmi le groupe comprenant: silanes, alcools, amines, acides acryliques, acides méthacryliques, acrylates; méthacrylates, méthacrylates de glycidyle et anhydrides; ionomères de polyoléfines; nanocomposés de polyoléfines; copolymères séquencés de styrène-butadiène; copolymères séquencés de styrène-butadiène-styrène; copolymères séquencés de styrène-éthylène/propylène-styrène; copolymères séquencés de styrène-éthylène/butylène-styrène et des mélanges de ceux-ci;
dans lequel l'agent de compatibilité est présent dans la composition en une quantité de 5-10% en poids; et
où l'agent de compatibilité comprend une polyoléfine à base d'éthylène et/ou une polyoléfine à base de propylène selon l'une quelconque des revendications précédentes, la quantité d'agent de compatibilité présent dans la composition de polymères est telle que les quantités totales de polyoléfine à base d'éthylène et de polyoléfine à base de propylène dans la composition, tombent dans les quantités selon l'une quelconque des revendications précédentes.

13. Article réticulé par l'humidité selon la revendication 12, dans lequel l'agent de compatibilité comprend un copolymère séquencé de styrène-éthylène/butylène-styrène.

14. Article réticulé par l'humidité selon l'une quelconque des revendications précédentes, dans lequel un rapport pondéral de la polyoléfine à base de propylène à la polyoléfine à base d'éthylène est de 1,6:1 à 0,7:1, par exemple de 1,4:1 à 0,9:1.

15. Article réticulé par l'humidité selon l'une quelconque des revendications précédentes, dans lequel l'article est thermorétractable.
